# EUROPÄISCHE PATENTSCHRIFT

(11) **EP 2 378 103 B1**
(45) Veröffentlichungstag und Bekanntmachung des Hinweises auf die Patenterteilung: **21.10.2015**
(21) Anmeldenummer: 11001267.1
(22) Anmeldetag: 16.02.2011
(51) Int. Cl.: F02K 3/077, F02K 3/075, F01D 25/08

(54) **Fluggasturbinenantrieb**
Aircraft gas turbine drive
Entraînement de turbine à gaz volatile

(30) Priorität: 26.02.2010 DE 102010009477
(43) Veröffentlichungstag der Anmeldung: 19.10.2011
(73) Patentinhaber: Rolls-Royce Deutschland Ltd & Co KG, 15827 Blankenfelde-Mahlow (DE)
(72) Erfinder: Negulescu, Dimitrie, Dr., 14163 Berlin (DE)
(74) Vertreter: Hoefer & Partner Patentanwälte mbB

(56) Entgegenhaltungen:
- DE-A1- 1 426 423
- US-A- 4 222 235
- US-A- 4 958 289

## Beschreibung

Die Erfindung bezieht sich einen Fluggasturbinenantrieb und kann insbesondere für Fluggasturbinenantriebe mit Druckpropellern verwendet werden.

Der Stand der Technik beschreibt Propellerturboluftstrahltriebwerke, bei welchen in üblicher Weise ein Kerntriebwerk zum Antrieb der Arbeitsturbine verwendet wird. Dieses umfasst üblicherweise einen Niederdruckverdichter, einen Hochdruckverdichter, eine Brennkammer, eine Hochdruckturbine sowie eine Niederdruckturbine sowie gegebenenfalls einen Propeller und ist beispielsweise als Zweiwellenkerntriebwerk ausgebildet. Es versteht sich, dass die einzelnen Verdichter- und Turbinenbereiche mehrstufig ausgebildet sein können.

Die in die Niederdruckturbine eintretende Gasströmung weist ein hohes Temperaturniveau auf. Hieraus ergeben sich Nachteile in Bezug auf die Werkstoffe von Komponenten, die dieser Strömung ausgesetzt sind. Der Einsatz temperaturbeständiger Werkstoffe sowie die Kühlung der Komponenten der Niederdruckturbine erfordern einen hohen produktionstechnischen Aufwand. Zusätzlich sind spezielle Maßnahmen für die Kühlung weiterer Komponenten im Strömungskanal zur Düse erforderlich.

Insbesondere bei der Anwendung eines derartigen Gasturbinentriebwerks in Kombination mit zumindest einem Druckpropeller bereitet das hohe Temperaturniveau weitere Probleme, da zusätzliche Maßnahmen zur Kühlung erforderlich sind, beispielsweise zur Kühlung eines Getriebes oder eines Systems für die Propellerblatteinstellung.

Die US 4,222,235 A beschreibt einen Mischer, mit welchem stromab eine Hochdruckturbine zusätzliche Luft aus einem Nebenstromkanal zugeführt wird. Diese Luft gelangt allerdings zunächst in eine zweite Brennkammer. Es findet somit eine zweistufige Verbrennung statt, bei welcher nach der ersten Brennkammer und der nachgeordneten Turbine nochmals Luft zugeführt und der zweiten Brennkammer zugeleitet wird.

Die DE 14 26 423 A1 beschreibt eine Hochdruckturbine und eine Niederdruckturbine. Stromab der Niederdruckturbine ist eine Mischzone vorgesehen, aus der Luft in eine Hilfsturbine geleitet wird. Es handelt sich somit ebenfalls um zwei einander nachgeordnete Verbrennungsvorgänge mit jeweils zugeordneten Turbinen.

Der Erfindung liegt die Aufgabe zugrunde, einen Fluggasturbinenantrieb der eingangs genannten Art zu schaffen, welcher bei einfachem Aufbau und einfacher, kostengünstiger Herstellbarkeit die Nachteile des Standes der Technik vermeidet und insbesondere ein niedrigeres Temperaturniveau im Bereich der Niederdruckturbine ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der Fluggasturbinenantrieb ein Kerntriebwerk umfasst, welches mit zumindest einer Hochdruckturbine und einer Niederdruckturbine ausgerüstet ist. Weiterhin umfasst das erfindungsgemäße Fluggasturbinentriebwerk einen das Kerntriebwerk umgebenden Nebenstromkanal. Erfindungsgemäß ist vorgesehen, dass der Nebenstrom durch den Nebenstromkanal und der Kernstrom durch das Kerntriebwerk in einem Einlaufbereich der Niederdruckturbine einer Mischervorrichtung zugeleitet werden, in welcher die beiden Ströme gemischt werden, um auf diese Weise ein niedrigeres Temperaturniveau beim Einströmen in die Niederdruckturbine zu erzielen.

Erfindungsgemäß kann auf zusätzliche Maßnahmen für die Kühlung der oben genannten Komponenten, welche sich im Heißgasstrom des Abgasteils der Niederdruckturbine befinden, verzichtet werden oder es ist ein geringerer Kühlaufwand erforderlich, beispielsweise für die Kühlung des Getriebes des Druckpropellers oder des Systems für die Propellerblatteinstellung.

Erfindungsgemäß ist somit ein Wellenleistungstriebwerk, beispielsweise ein Zweiwellenkerntriebwerk, geschaffen, welches mit zumindest einem Druckpropeller oder zwei gegenläufigen Druckpropellern ausrüstbar ist.

Erfindungsgemäß wird der Nebenstrom des Kerntriebwerks durch die Mischervorrichtung (Strömungsmischeinrichtung) vor dem Eintritt in die Niederdruckturbine mit den heißen Gasen der Kerntriebwerksturbine (Primärstrom aus der Mitteldruckturbine) gemischt. Dies führt zu einer erheblichen Senkung des Temperaturniveaus.

Erfindungsgemäß besteht der Mischer aus einem Gehäuse, welches zur Durchströmung mit dem Kernstrom ausgebildet ist. Das Gehäuse weist in seinen Wandungen Ausnehmungen zur Einleitung des Nebenstroms auf. Weiterhin umfasst der Mischer bevorzugterweise ein Gitter mit Strömungsprofilen (Leitblechen), welches bevorzugt an den Seitenwänden des Gehäuses befestigt ist. Zur besseren Durchmischung der Strömungen ist es weiterhin vorteilhaft, blütenförmige Hinterkanten vorzusehen (Blütenmischer).

Durch die in der Mischvorrichtung auftretenden geringeren Temperaturen ist es möglich, im Inneren der Mischvorrichtung Strukturteile für eine Lageraufhängung der Niederdruckturbine anzuordnen.

Erfindungsgemäß wird somit der kalte Nebenstrom mit dem heißen Primärstrom oder Kernstrom innerhalb der Mischvorrichtung zuverlässig und gleichmäßig gemischt. Hierzu dienen die Perforationen der Seitenwände, Spalte der blütenförmigen Hinterkanten sowie die an der Außen- und Innenwand des Mischerringkanals vorgesehenen Ausnehmungen (Perforationen). Wie erwähnt, kann die Mischvorrichtung bevorzugterweise in Form eines Ringkanals ausgebildet sein, so dass sich über den Umfang ein gleichmäßiges Temperaturniveau ergibt. Durch geeignete Anordnung und Dimensionierungen der Ausnehmungen in den Wandungen des Gehäuses ist es möglich, eine günstige radiale Temperaturverteilung der Strömung durch die Niederdruckturbine und durch den Strömungskanal zur Düse zu realisieren.

Ein weiterer, wesentlicher Vorteil der erfindungsgemäßen Lösung ergibt sich dadurch, dass durch die Mischung des Kernstroms mit dem Nebenstrom ein erhöhter Massendurchsatz durch die Niederdruckturbine erfolgt, so dass die Niederdruckturbine mit niedrigerer Stufenzahl versehen werden kann. Erfindungsgemäß ist es beispielsweise möglich, lediglich zwei Stufen in der Niederdruckturbine vorzusehen. Das Gasgemisch entspannt sich durch die Arbeitsstufen der Niederdruckturbine und leistet so Arbeit an das Getriebe (Differentialgetriebe), welches den oder die Druckpropeller antreibt. Nach Entspannung durch die Niederdruckturbine wird das Gas durch einen ringförmigen Strömungskanal bevorzugt über eine konvergente Düse vollständig entspannt und leistet so noch einen beachtlichen Anteil an Restschub.

Erfindungsgemäß ergeben sich somit eine erhebliche Gewichtsreduzierung und Kosteneinsparung. Weiterhin erhöhen sich die Zuverlässigkeit des Propellerturboluftstrahltriebwerks sowie die Lebensdauer der einzelnen Komponenten.

Im Folgenden wird die Erfindung anhand eines Ausführungsbeispiels in Verbindung mit der Zeichnung beschrieben. Dabei zeigt:
- Fig. 1: eine schematische Schnittansicht des erfindungsgemäßen Fluggasturbinenantriebs,
- Fig. 2: eine vergrößerte Detailansicht der Mischervorrichtung sowie der Niederdruckturbine, und
- Fig.3: eine Darstellung eines Propellerturboluftstrahltriebwerks gemäß dem Stand der Technik.

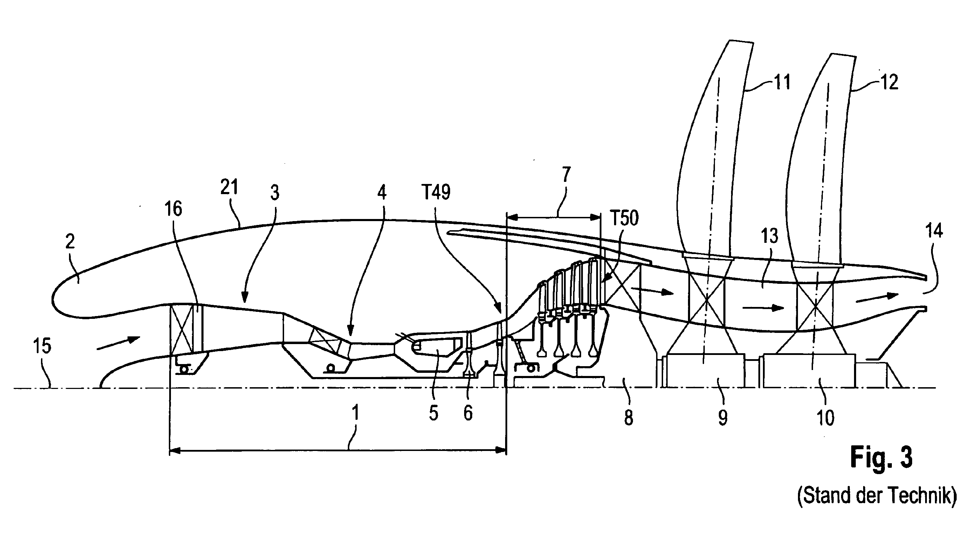

Der Stand der Technik (Fig. 3) zeigt ein Zweiwellenkerntriebwerk 1 mit einem Einlass 2, durch welchen eine Luftströmung einem Niederdruckverdichter 3 und nachfolgend einem Hochdruckverdichter 4 zugeführt wird. Nachfolgend sind eine Brennkammer 5, eine Hochdruckturbine 6 und sowie eine Niederdruckturbine 7 angeordnet. Ein derartiger Aufbau ist aus dem Stand der Technik bekannt, so dass auf detaillierte Erläuterungen verzichtet werden kann.

Vor dem Niederdruckverdichter kann ein Fan angeordnet sein.

Aus der Hochdruckturbine strömt die Gasströmung mit einem Temperaturniveau T49 in die Niederdruckturbine 7 und verlässt diese mit einem Temperaturniveau T50. Dieses Temperaturniveau T50 ist sehr hoch, so dass es erforderlich ist, ein Getriebe 8 zum Antrieb einer vorderen Nabe 9 und einer hinteren Nabe 10 eines vorderen Druckpropellers 11 und eines hinteren Druckpropellers 12 ebenso zu kühlen, wie die Naben 9 und 10.

Die Fig. 3 zeigt weiterhin, dass die Strömung durch einen Strömungskanal 13 einer Düse 14 zugeleitet wird.

Die rotierenden Bauelemente rotieren um eine Maschinenachse 15.

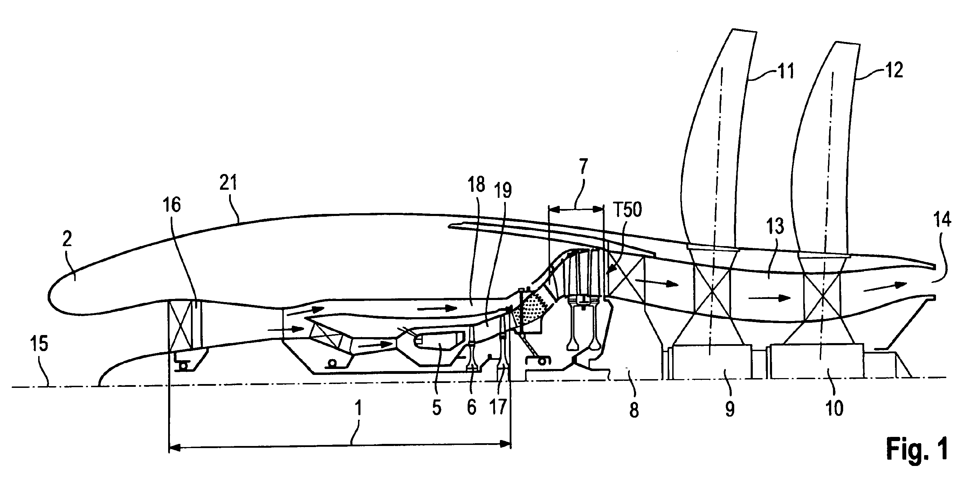

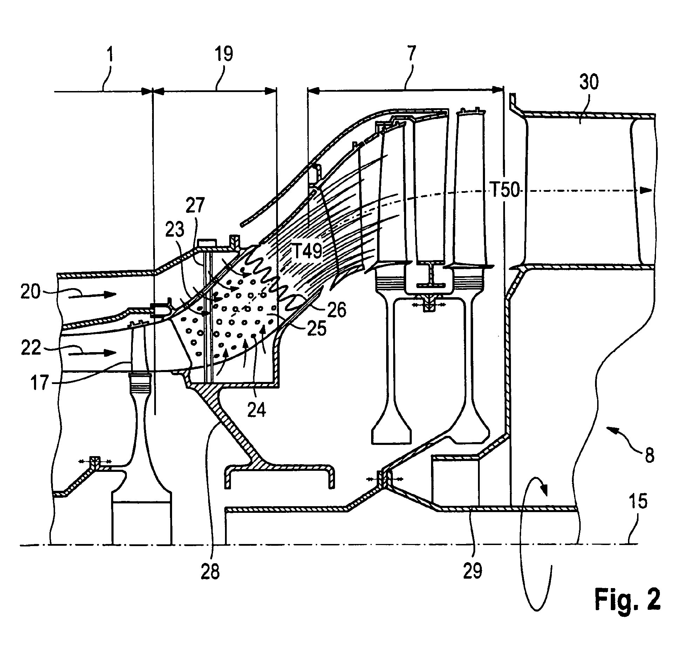

Die Fig. 1 und 2 zeigen eine Ausgestaltungsform des erfindungsgemäßen Fluggasturbinenantriebs, wobei gleiche Teile im Vergleich zu der Ausgestaltung des Standes der Technik gemäß Fig. 4 mit gleichen Bezugszeichen versehen sind.

Im Unterschied zum Stand der Technik sind der Niederdruckverdichter 3, der Hochdruckverdichter 4, die Brennkammer 5, die Hochdruckturbine 6 sowie eine Mitteldruckturbine 17 von einem Nebenstromkanal 18 umgeben. Durch diesen strömt ein Nebenstrom 20 (siehe Fig. 2), welcher einer Mischervorrichtung 19 zugeleitet wird, in welche auch ein Primärstrom 22, der die Mitteldruckturbine 17 verlassen hat, eingeleitet wird.

Die Mischervorrichtung 19 umfasst ein Gehäuse 23 mit Ausnehmungen 24, durch welche der kalte Nebenstrom in den heißen Primärstrom eingemischt wird. Für eine gute Vermischung sind Mischerleitbleche 25 sowie eine blütenförmige Hinterkante 26 vorgesehen.

Durch das ringförmige Gehäuse 23 der Mischervorrichtung 19 ragen Strukturelemente 27, welche beispielsweise zur Lagerung einer Niederdruckturbinen-Lagerstruktur 28 dienen. Diese lagert beispielsweise eine Niederdruckturbinenwelle 29.

Die aus der Mischervorrichtung 19 ausströmende Strömung weist ein Temperaturniveau T49 auf, welches erheblich niedriger ist als ein vergleichbares Temperaturniveau T49 des Standes der Technik auf Ausströmbereich der Niederdruckturbine 7. Demgemäß ist auch das Temperaturniveau T50 (siehe Fig. 1) niedriger als das vergleichbare Temperaturniveau des Standes der Technik (Fig. 3).

Die Fig. 2 und 3 zeigen weiterhin das Getriebe 8 sowie die vordere und hintere Nabe 9 bzw. 10 des vorderen bzw. hinteren Druckpropellers 11, 12.

Die Niederdruckturbine 7 kann erfindungsgemäß zweistufig ausgebildet sein, so wie dies in Fig. 2 dargestellt ist.

Das Bezugszeichen 30 zeigt ein Niederdruckturbinen-Leitrad.

Erfindungsgemäß wird somit die Niederdruckturbine durch den Kernstrom 22 des Kerntriebwerks sowie durch den Nebenstrom 20 des Nebenstromkanals 18 angetrieben. Durch die Mischervorrichtung 19 ergibt sich eine erhebliche Temperaturreduzierung, welche zu einem vorteilhaften Temperaturgradienten führt. Dies hat auch zur Folge, dass die aus der Düse 14 abströmenden Gase, verglichen mit dem Stand der Technik, wesentlich kälter sind.

Die Erfindung ist auf ein Propellerturboluftstrahltriebwerk mit einem einfachen Druckpropeller oder mit zwei gegenläufigen Druckpropellern anwendbar. Dabei ist die Erfindung sowohl für Ausgestaltungen eines Triebwerks anwendbar, bei welcher die Gasströmung durch rotierende Naben der Druckpropeller durchgeleitet wird (siehe beispielsweise Fig. 1), als auch bei Ausgestaltungen, bei welchen die austretende Strömung außerhalb den oder die Propeller durchgeführt wird.

Die Erfindung ist weiterhin anwendbar für ein Compound-Strahltriebwerk mit variablem Nebenstromverhältnis, welches beispielsweise zum Antrieb von Überschall-Passagierflugzeugen dienen kann.

### Bezugszeichenliste

- 1: Zweiwellenkerntriebwerk
- 2: Einlass
- 3: Niederdruckverdichter
- 4: Hochdruckverdichter
- 5: Brennkammer
- 6: Hochdruckturbine
- 7: Niederdruckturbine
- 8: Getriebe
- 9: vordere Nabe
- 10: hintere Nabe
- 11: vorderer Druckpropeller
- 12: hinterer Druckpropeller
- 13: Strömungskanal
- 14: Düse
- 15: Maschinenachse
- 16: Fan / Propeller
- 17: Mitteldruckturbine
- 18: Nebenstromkanal
- 19: Mischervorrichtung
- 20: Nebenstrom
- 21: Gondel
- 22: Primärstrom/Kernstrom
- 23: Gehäuse
- 24: Ausnehmung
- 25: Mischleitblech
- 26: blütenförmige Hinterkante
- 27: Strukturelement
- 28: Niederdruckturbinen-Lagerstruktur
- 29: Niederdruckturbinenwelle
- 30: Niederdruckturbinenleitrad
- T49/T50: Temperaturniveau

## Patentansprüche

1. Fluggasturbinenantrieb mit einen Kerntriebwerk (1) mit zumindest einer Hochdruckturbine (6) und einer direkt stromab der Hochdruckturbine (6) nachgeordneten Niederdruckturbine (7), mit einem das Kerntriebwerk (1) umgebenden Nebenstromkanal (18), sowie mit einer Mischervorrichtung (19), welche stromab der Hochdruckturbine (6) in einem Einlaufbereich der Niederdruckturbine (7) angeordnet ist und in welche ein Nebenstrom (20) aus dem Nebenstromkanal (18) und ein Kernstrom (22) aus dem Kerntriebwerk (1) eingeleitet werden.

2. Fluggasturbinenantrieb nach Anspruch 1, **dadurch gekennzeichnet, dass** die Mischervorrichtung (19) ein Gehäuse (23) umfasst, welches zur Durchströmung mit dem Kernstrom (22) ausgebildet ist und welches in seinen Wandungen Ausnehmungen (24) zur Einleitung des Nebenstroms (20) aufweist.

3. Fluggasturbinenantrieb nach Anspruch 2, **dadurch gekennzeichnet, dass** das Gehäuse (23) an seinem der Niederdruckturbine (7) zugewandten Endbereich mit zumindest einer blütenförmigen Hinterkante (26) versehen ist.

4. Fluggasturbinenantrieb nach Anspruch 2 oder 3, **dadurch gekennzeichnet, dass** in dem Gehäuse (23) zumindest ein Leitblech (25) angeordnet ist.

5. Fluggasturbinenantrieb nach einem der Ansprüche 1 bis 4, **dadurch gekennzeichnet, dass** der Niederdruckturbine (7) eine Düse (14) nachgeordnet ist.

6. Fluggasturbinenantrieb nach Anspruch 5, **dadurch gekennzeichnet, dass** die Düse (14) zur Schuberzeugung konvergent ausgebildet ist.

7. Fluggasturbinenantrieb nach einem der Ansprüche 1 bis 6, **dadurch gekennzeichnet, dass** die Niederdruckturbine (7) mehrstufig ausgebildet ist.

8. Verwendung eines Fluggasturbinenantriebs nach einem der Ansprüche 1 bis 7 in einem Propellerluftstrahltriebwerk mit zwei gegenläufigen Druckpropellern (11, 12) oder einem einfachen Druckpropeller.

## Claims

1. Aircraft gas-turbine drive having a core engine (1) with at least one high-pressure turbine (6) and a low-pressure turbine (7) arranged directly downstream of the high-pressure turbine (6), with a bypass duct (18) surrounding the core engine (1) as well as with a mixer device (19) which is arranged downstream of the high-pressure turbine (6) in an intake area of the low-pressure turbine (7), and into which mixer device (19) a secondary flow (20) from the bypass duct (18) and a core flow (22) from the core engine (1) are introduced.

2. Aircraft gas-turbine drive in accordance with Claim 1, **characterized in that** the mixer device (19) includes a casing (23), which is designed for being passed by the core flow (22) and which is provided in its walls with recesses (24) for introducing the secondary flow (20).

3. Aircraft gas-turbine drive in accordance with Claim 2, **characterized in that** the casing (23) is provided with at least one blossom-shaped trailing edge (26) at its end area facing the low-pressure turbine (7).

4. Aircraft gas-turbine drive in accordance with Claim 2 or 3, **characterized in that** at least one baffle plate (25) is arranged in the casing (23).

5. Aircraft gas-turbine drive in accordance with one of the Claims 1 to 4, **characterized in that** a nozzle (14) is disposed downstream of the low-pressure turbine (7).

6. Aircraft gas-turbine drive in accordance with Claim 5, **characterized in that** the nozzle (14) is designed convergent for thrust generation.

7. Aircraft gas-turbine drive in accordance with one of the Claims 1 to 6, **characterized in that** the low-pressure turbine (7) is of multi-stage design.

8. Use of an aircraft gas-turbine drive in accordance with one of the Claims 1 to 7 in a propeller jet engine having two counter-rotating pusher propellers (11, 12) or a simple pusher propeller.

## Revendications

1. Entraînement de turbine à gaz aéronautique comprenant un moteur de base (1) avec au moins une turbine haute pression (6) et une turbine basse pression (7) disposée directement en aval de la turbine haute pression (6), avec un canal de flux secondaire (18) entourant le moteur de base (1), ainsi qu'avec un dispositif mélangeur (19) qui est disposé en aval de la turbine haute pression (6) dans une zone d'entrée de la turbine basse pression (7) et dans lequel sont introduits un flux secondaire (20) provenant du canal de flux secondaire (18) et un flux central (22) provenant du moteur de base (1).

2. Entraînement de turbine à gaz aéronautique selon la revendication n° 1, **caractérisé en ce que** le dispositif mélangeur (19) comprend un carter (23) conçu pour être traversé par le flux central (22) et qui présente dans ses parois des évidements (24) pour introduire le flux secondaire (20).

3. Entraînement de turbine à gaz aéronautique selon la revendication n° 2, **caractérisé en ce que** dans sa zone terminale orientée vers la turbine basse pression (7), le carter (23) présente au moins un bord de fuite (26) en forme de fleur.

4. Entraînement de turbine à gaz aéronautique selon la revendication n° 2 ou n° 3, **caractérisé en ce que** dans le carter (23) est disposée au moins une tôle déflectrice (25).

5. Entraînement de turbine à gaz selon une des revendications n° 1 à n° 4, **caractérisé en ce qu'**une tuyère (14) est disposée en aval de la turbine basse pression (7).

6. Entraînement de turbine à gaz aéronautique selon la revendication n° 5, **caractérisé en ce que** la tuyère (14) est conçue de manière convergente pour générer de la poussée.

7. Entraînement de turbine à gaz selon une des revendications n° 1 à n° 6, **caractérisé en ce que** la turbine basse pression (7) est de conception polyétagée.

8. Mise en oeuvre d'un entraînement de turbine à gaz aéronautique selon une des revendications n° 1 à n° 7 dans un turbopropulseur aéronautique à deux hélices propulsives contrarotatives (11, 12) ou à simple hélice propulsive.
